# EUROPEAN PATENT APPLICATION

(11) **EP 2 328 060 A1**
(43) Date of publication of application: **01.06.2011**
(21) Application number: 10192651.7
(22) Date of filing: 26.11.2010
(51) Int. Cl.: G06F 1/32, H02B 1/00, H03K 17/00, H04M 7/00, H04M 1/73, H04M 11/06, H04L 12/28

(54) **Home gateway**

(30) Priority: 26.11.2009 CN 200920260913 U
(71) Applicant: Huawei Device Co., Ltd., Shenzhen, Guangdong 518129 (CN)
(72) Inventor: Zhou, Jingliang, 518129, Shenzhen Guangdong (CN); Hua, Jin, 518129, Shenzhen Guangdong (CN)
(74) Representative: Charles, Glyndwr

(57) **Abstract**

A home gateway is disclosed. The home gateway includes: a digital enhanced cordless telecommunications (DECT) module, configured to communicate with a DECT terminal in a local area network (LAN) covered by the home gateway and provide the DECT terminal with voice services; a digital subscriber loop (xDSL) module, configured to communicate with a data service terminal in the LAN covered by the home gateway and provide the data service terminal with data services; a power module, configured to supply power to the DECT module and/or the xDSL module; a selecting module, connected to the power module and configured to connect the power module to the DECT module and/or the xDSL module selectively. By using the home gateway of the present invention, the electricity of the power supply provided for the home gateway may be controlled and saved.

## Description

### Field of the Invention

The present invention relates to the communication field, and in particular, to a home gateway.

### Background of the Invention

With the popularity of broadband data services, the method that the x digital subscriber loop (xDSL) home gateway is employed for the broadband data service connection to access the Internet has been used by most of families, where the home gateway uses the telephone line as a medium for accessing the network. To ensure that the fixed telephone voice service of a user is not affected during the process of accessing the Internet" a splitter is generally used to isolate the signals of the broadband data service from the signals of the fixed telephone voice service, which avoids mutual interference.

With the development of convergence technologies, products that integrate the digital enhanced cordless telecommunications (DECT) function and xDSL access function are emerging in the market. With these products, the installation is easy, and the user does not need to use the splitter. In addition, with these products, costs of the user may be reduced. That is because the user may enjoy the cordless telephone services and access the Internet by using the xDSL broadband technology without buying a DECT device.

However, these products in the present market supply power to the xDSL module and the DECT module concurrently once they are started. If these products keep supplying power to the two modules for a long time, it goes against the energy saving and environmental protection of the whole home gateway.

### Summary of the Invention

Embodiments of the present invention provide a home gateway to control the energy saving.

To achieve the above objective, embodiments of the present invention provide the following technical solution:
A home gateway includes:
   a DECT module, configured to communicate with a DECT terminal in a local area network (LAN) covered by the home gateway and provide the DECT terminal with voice services;
   an xDSL module, configured to communicate with a data service terminal in the LAN covered by the home gateway and provide the data service terminal with data services;
   a power module, configured to supply power to the DECT module and/or the xDSL module; and
   a selecting module, connected to the power module and configured to connect the power module to the DECT module and/or the xDSL module selectively.

According to the above technical solution, with the selecting module, at least one of the DECT module and the xDSL module may be powered. In this way, the electricity of the power supply provided for the home gateway may be controlled and saved, which meets the user's requirements for using a functional module in the home gateway independently.

### Brief Description of the Drawings

FIG. 1 shows a structure of a home gateway in a first embodiment of the present invention;
FIG. 2 shows a structure of a home gateway in a second embodiment of the present invention;
FIG. 3 is a schematic diagram illustrating the state switching corresponding to a selecting module in the second embodiment of the present invention; and
FIG. 4 shows a structure of a home gateway in a third embodiment of the present invention.

### Detailed Description of the Invention

For better understanding of the objective, technical solution and merits of the present invention, embodiments of the present invention are hereinafter described in detail with reference to the accompanying drawings.

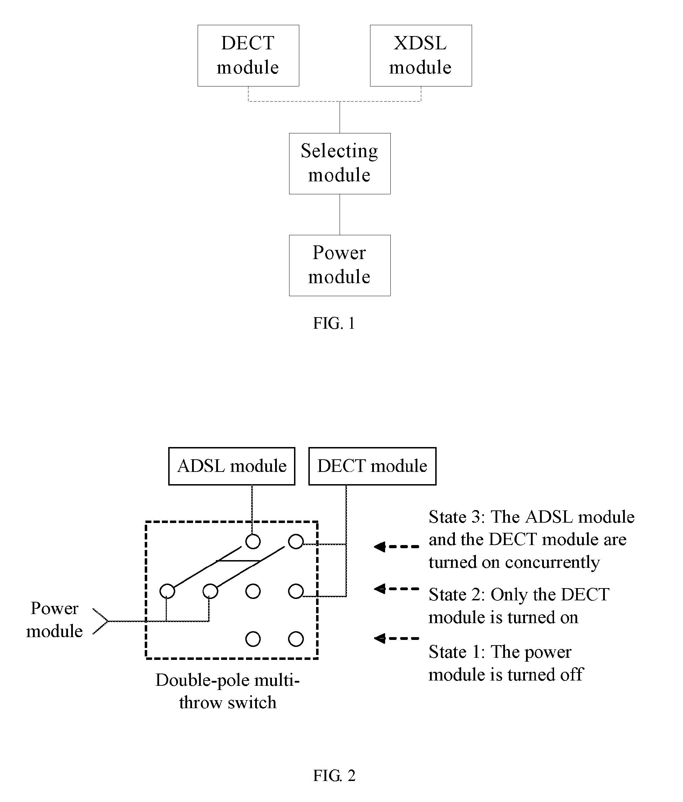

The first embodiment of the present invention provides a home gateway. As shown in FIG. 1, the home gateway includes a DECT module, an xDSL module, a power module, and a selecting module.

The DECT module is configured to communicate with a DECT terminal in the LAN covered by the home gateway and provide the DECT terminal with voice services.

The xDSL module is configured to communicate with a data service terminal in the LAN covered by the home gateway and provide the data service terminal with data services.

The power module is configured to supply power to the DECT module and/or the xDSL module.

The selecting module is connected to the power module and configured to connect the power module to the DECT module and/or the xDSL module selectively.

In this embodiment, with the selecting module, at least one of the DECT module and the xDSL module may be powered, so that the electricity of the power supply provided for the home gateway may be controlled and saved, enabling the user to select a module flexibly.

The home gateway in the preceding embodiment may further include a splitter. The splitter is configured to: separate the voice services from the data services, where the voice services and the data services are carried on the home telephone line connected to the home gateway, communicate with the DECT module and provide the DECT module with the voice services, and communicate with the xDSL module and provide the xDSL module with the data services.

The second embodiment of the present invention provides a home gateway. As shown in FIG. 2, the selecting module is a double-pole multi-throw switch (specifically, the double-pole three-throw switch in FIG. 2), and the xDSL module is an asymmetric digital subscriber line (ADSL) module. The double-pole three-throw switch connects the power module to the ADSL module and/or the DECT module, and three states exist accordingly. In FIG. 2, the fixing end of the double-pole three-throw switch is connected to the power module, and the active end may be connected to different locations to power on or power off different modules. For example, when the active end is connected to the bottom contact in FIG. 2, the power module does not supply power to either of the two modules, and the home gateway is in the power-off state (corresponding to state 1 in FIG. 2). When the active end is connected to the middle contact in FIG. 2, the power module supplies power to the DECT module (corresponding to state 2 in FIG. 2) only. When the active end is connected to the upper contact in FIG. 2, the power module supplies power to the ADSL module and the DECT module (corresponding to state 3 in FIG. 2) concurrently.

Specifically, the two-pole multi-throw switch may be set on the casing of the home gateway. The switch corresponds to at least two state fixing points (in the preceding example, the switch corresponds to three state fixing points); the two state fixing points may correspond to the states of connections between the power module and both the DECT module and the xDSL module, and of a connection between the power module and the DECT module. Certainly, in the preceding example, a state fixing point corresponds to a situation that power is supplied to neither of the two modules.

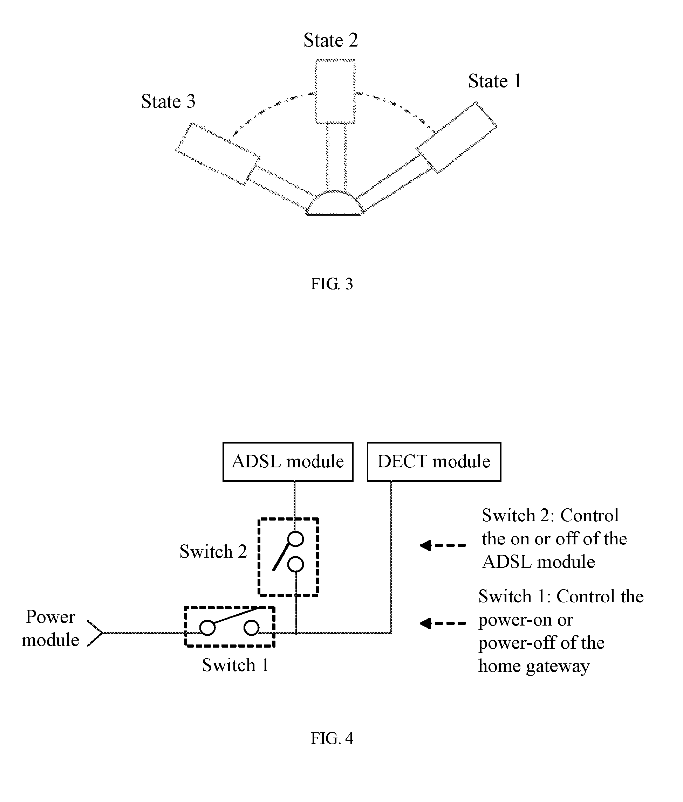

Further, the switch includes a push or pull handle structure. As shown in FIG. 3, the handle structure is connected to the bottom of the switch through a connecting rod. Through the push or pull of the handle structure, the three state fixing points may correspond to the preceding three switch states respectively.

In addition to the handle structure, the switch may be a rotary panel (not shown in FIG. 3). For example, in the preceding embodiment, at least three fixing points for the rotation of the panel correspond to the three state fixing points respectively.

From the perspective of use habits, users usually need to maintain the voice function available all the time, and use the broadband data service for only a certain period of time. From the perspective of electrical energy consumption, the ADSL module (corresponding to data services) consumes more electrical energy than the DECT module (corresponding to voice services).

On the product of the conventional art, only a power control switch is set to control the power-on or power-off of the product, without a switch for controlling the on or off of the ADSL module. Thus, the user can only turn on the DECT module and the ADSL module concurrently or turn off the DECT module and the ADSL module concurrently (by turning off the power module). This means that when the user wants to maintain the telephone service available but does not want to use the broadband data service, the circuit of the ADSL module is still consuming electrical energy, which goes against the energy saving and environmental protection. In this embodiment, a mechanism is provided to close the data service (i.e. to turn off the ADSL module) and to keep the voice service (i.e. to turn on the DECT module) only; thus the energy saving requirement is met.

In this embodiment, multiple state fixing points are set to implement multiple switch states, so that the user can let the home gateway to turn on or turn off specific functional modules selectively. Compared with the conventional art, in this embodiment, the user can control the power supply of the functional modules in the home gateway in pertinence, thereby facilitating the use of the home gateway.

The third embodiment of the present invention provides a home gateway. As shown in FIG. 4, the selecting module is two single-pole single-throw switches that are set at the trunk connected to the power module and at the tributary connected to the xDSL module respectively. Specifically, the xDSL module in this embodiment is an ADSL module. As shown in FIG. 4, after switch 1 and switch 2 are closed at the same time, the power module supplies power to the ADSL module and the DECT module concurrently. If switch 1 is closed and switch 2 is open, the power module supplies power to the DECT module, but the ADSL module does not work. If only switch 2 is closed and switch 1 is open, or switch 1 and switch 2 are open concurrently, the power module does not supply power to either module.

Specifically, the two single-pole single-throw switches may be set on the casing of the home gateway. Each single-pole single-throw corresponds to a button. The two buttons are used to control the open or close of the corresponding single-pole single-throw switches respectively.

From the perspective of use habits, users usually need to maintain the voice function available all the time, and use the broadband data service for only a certain period of time. From the perspective of electrical energy consumption, the ADSL module (data services) consumes more electrical energy than the DECT module (voice services).

On the product of the conventional art, only a power control switch is set to control the power-on or power-off of the product, without a switch for controlling the on or off of the ADSL module. Thus, the user can on turn on the DECT module and the ADSL module concurrently or turn off the DECT module and the ADSL module concurrently (by turning off the power module). This means that when the user wants to maintain the telephone service available but does not want to use the broadband data service, the circuit of the ADSL module is still consuming electrical energy, which goes against the energy saving and environmental protection. In this embodiment, a mechanism is provided to close the data service (i.e. to turn off the ADSL module) and to keep the voice service (i.e. to turn on the DECT module) only, thus the energy saving requirement is met.

In this embodiment, two buttons are set to implement multiple switch states, so that the users can let the home gateway to turn on or turn off specific functional modules selectively. Compared with the conventional art, in this embodiment, the user can control the power supply of the functional modules in the home gateway in pertinence, thereby facilitating the use of the gateway.

It is apparent that those skilled in the art can make various modifications and variations to the present invention without departing from the scope of the present invention. The present invention is intended to cover such modifications and variations provided that they fall within the protection scope defined by the claims or their equivalents.

## Claims

1. A home gateway, comprising:
a digital enhanced cordless telecommunications (DECT) module, configured to communicate with a DECT terminal in a local area network (LAN) covered by the home gateway and provide the DECT terminal with voice services;
a digital subscriber loop (xDSL) module, configured to communicate with a data service terminal in the LAN covered by the home gateway and provide the data service terminal with data services;
a power module, configured to supply power to the DECT module and/or the xDSL module; and
a selecting module, connected to the power module and configured to connect the power module to the DECT module and/or the xDSL module selectively.

2. The home gateway of claim 1, further comprising a splitter configured to: separate the voice services from the data services, where the voice services and the data services are carried on a home telephone line connected to the home gateway, communicate with the DECT module and provide the DECT module with the voice services, and communicate with the xDSL module and provide the xDSL module with the data services.

3. The home gateway of claim 1 or 2, wherein the selecting module is a double-pole multi-throw switch and configured to connect the power module to the DECT module and the xDSL module or connect the power module to the DECT module.

4. The home gateway of claim 1 or 2, wherein the selecting module is two single-pole single-throw switches and configured to connect the power module to the DECT module and the xDSL module or connect the power module to the DECT module.

5. The home gateway of claim 3, wherein the switch is located on a casing of the home gateway and corresponds to at least two state fixing points, and the at least two state fixing points correspond to states of connections between the power module and both the DECT module and the xDSL module and a connection between the power module and the DECT module.

6. The home gateway of claim 5, wherein the switch comprises a push or pull handle structure and the handle structure is connected to the bottom of the switch through a connecting rod.

7. The home gateway of claim 5, wherein the switch is a rotary panel and the fixing points for rotation of the panel correspond to the three state fixing points.

8. The home gateway of claim 4, wherein the two single-pole single-throw switches are located on a casing of the home gateway, each single-pole single-throw switch corresponding to a button, and the button controls open or close of the each single-pole single-throw switch.
